# NOUVEAU FASCICULE DE BREVET EUROPEEN

(11) **EP 2 543 653 B2**
(45) Date de publication et mention de la décision concernant l'opposition: **11.01.2023**
(45) Mention de la délivrance du brevet: 23.04.2014
(21) Numéro de dépôt: 11172580.0
(22) Date de dépôt: 04.07.2011
(51) Int. Cl.: C04B 41/91, G04B 37/22

(54) **Procédé de fabrication d'une céramique mate non marquante**
Verfahren zur Herstellung einer matten Keramik
Method for manufacturing a matt ceramic

(43) Date de publication de la demande: 09.01.2013
(73) Titulaire: Comadur S.A., 2400 Le Locle (CH)
(72) Inventeur: Boucard, Sylvain, 25130 Villers-le-Lac (FR); Hawrylko, Jean-Mary, 25800 Valdahon (FR)
(74) Mandataire: Sambo, Marc-Olivier

(56) Documents cités:
- EP-A1- 1 840 107
- EP-A1- 1 840 108
- EP-A2- 1 188 520
- CH-A5- 696 906
- DE-A1- 3 811 680
- DE-A1- 4 138 214
- FR-A5- 2 031 782
- JP-A- H0 510 405
- JP-A- S60 232 832
- JP-A- 2008 075 129
- US-A- 3 654 692
- US-A- 3 717 957
- US-A- 5 885 690
- US-A- 5 997 988
- US-A1- 2002 023 692
- US-A1- 2003 128 903
- US-A1- 2003 128 903
- US-B1- 6 367 134
- US-B2- 6 802 650
- N. A. Laubscher et al.. "La ceramique. tout un monde" Bulletin SCC/52/2006. pages 33-37, septembre 2006
- Page internet http://www.pisorologia.com/ru/view details.php?ids=8&»dm=l 01
- Page internet http://www.gphg.org'watches/en/content/cal ibre-3125-mat
- Page internet http://www.montres-passion.fr/chanel-j12-c alibre-3125mate.html
- Page internet http://www.montres-de-luxe.com/Chanel-J12- 3125-retour-en-ceramique-noire-microbillee a47Q8.html
- Page internet http://pr.chanel.com/baselworld2011/
- Page internet http://pr.chanel.com/baselworld2011/pdf/te xte fr.pdf
- Page internet http://web.archive.Org/web/20110226194302/ http://www.baselworld.com/Tableau « Collections Bale 2011 » presentees par Chanel à Baselworld 2011

## Description

### Domaine de l'invention

L'invention se rapporte à un procédé de fabrication d'une pièce céramique mate d'une pièce d'horlogerie, de bijouterie ou de joaillerie et, plus particulièrement, à une telle pièce céramique non marquante.

### Arrière plan de l'invention

Il est connu de fabriquer des pièces en céramique mate pour diversifier leur esthétique. Toutefois, il s'est avéré que de telles pièces perdent leur attrait premier de pièces inrayables en laissant parfois apparaître des marques.

Les documents CH 696 906 et EP 1 840 108 présentent des procédés destinés à satiner la surface de matériaux durs tels que des céramiques.

### Résumé de l'invention

Le but de la présente invention est de pallier tout ou partie les inconvénients cités précédemment en proposant un procédé de fabrication d'une pièce céramique mate qui garde son esthétique avantageuse tout en gardant leur attrait d'être inrayable.

A cet effet, l'invention se rapporte à un procédé selon la revendication 1 du brevet.

On comprend donc, avantageusement selon l'invention, que les objets qui rencontreront la pièce en céramique mate, ne seront plus griffés mais glisseront sur les zones aplanies en évitant donc que les anfractuosités de l'état de surface ne se bouchent en laissant des traces. De plus, la céramique conserve avantageusement l'aspect mat recherché.

Conformément à d'autres caractéristiques avantageuses de l'invention :
- selon un deuxième mode de réalisation, le procédé comprend, entre l'étape a) et l'étape b), l'étape d) : polir la pièce céramique afin de mieux maîtriser la rugosité des parties mates obtenues lors de l'étape b) ;
- l'étape d) est obtenue par trovalisation ;
- lors de l'étape d), la rugosité Rₐ obtenue est inférieure à 20 nm ;
- l'étape a) est obtenue par frittage ;
- l'étape b) est obtenue par projection de particules de corindon ;
- l'étape c) est obtenue par tonnelage ;
- le rodage obtenu par l'étape c), est compris entre 3 µm et 7 µm ou, selon le deuxième mode de réalisation, entre 0,8 µm et 2 µm.

L'invention se rapporte également à une pièce d'horlogerie caractérisée en ce qu'elle comporte au moins une pièce céramique mate obtenue selon l'une des variantes du procédé ci-dessus.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue schématique d'une pièce d'horlogerie ;
- les figures 2 et 3 sont des représentations schématiques de l'état de surface selon un premier mode de réalisation du procédé de l'invention ;
- les figures 4 et 5 sont des représentations schématiques de l'état de surface selon un deuxième mode de réalisation du procédé de l'invention
- la figure 6 est un schéma fonctionnel d'un procédé de fabrication d'une pièce céramique mate selon l'invention.

### Description détaillée des modes de réalisation préférés

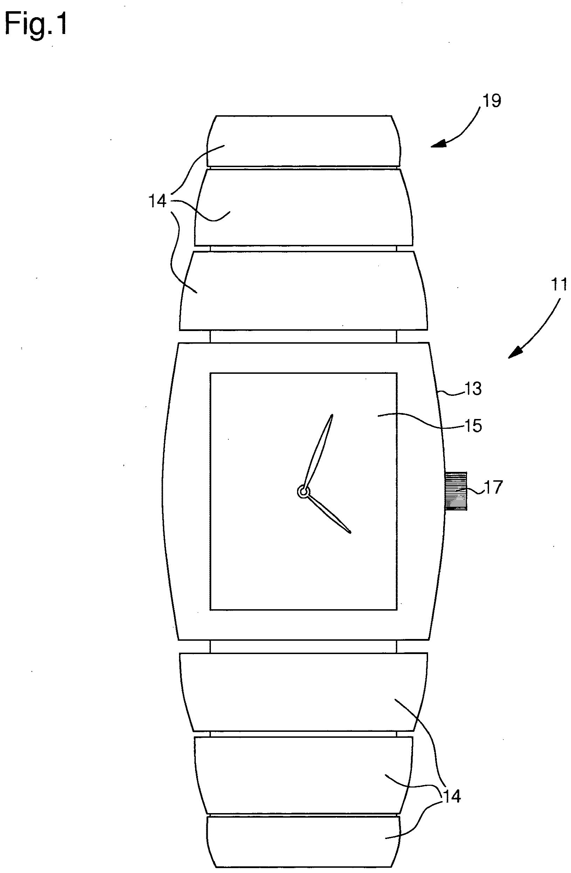

La figure 1 présente une pièce d'horlogerie 11 qui peut comporter au moins une pièce céramique mate obtenue selon les modes de réalisation du procédé 1 expliqué ci-dessous. Ainsi, la pièce céramique mate peut former des éléments de l'habillage de la pièce d'horlogerie 11 comme, de manière non limitative, la boîte 13, la lunette 15, les moyens de commande 17 et/ou le bracelet 19 comportant notamment des maillons 14.

Tous ces éléments au porté de l'utilisateur peuvent entrer en contact avec les objets du quotidien. Après analyse, il a été remarqué qu'une pièce en céramique mate est toujours inrayable mais la rugosité, engendrée par l'aspect mat souhaité, gratte tous les objets avec lesquelles la pièce entre en contact. Ainsi, la majorité des objets rencontrés étant faits à partir de matériaux plus tendres, la céramique griffe les matériaux qu'elle rencontre qui viennent remplir les anfractuosités de l'état de surface de la pièce en laissant penser que la pièce se raye.

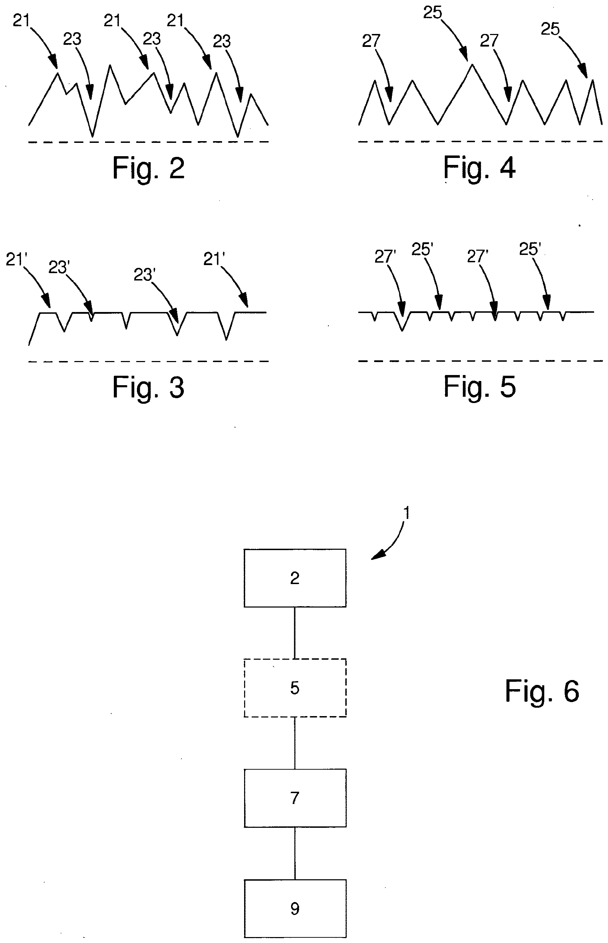

Pour remédier à cette constatation, le procédé 1 de fabrication d'une pièce céramique mate va être expliqué en relation avec les figures 2 à 6. Comme illustré à la figure 6, dans un premier mode de réalisation, le procédé 1 comporte une première étape 2 destinée à fabriquer une pièce céramique. Une telle étape peut être obtenue par divers processus. Préférentiellement selon l'invention, l'étape 2 est obtenue par frittage.

Le procédé 1 se poursuit avec une deuxième étape 7 destinée à sabler des parties de la pièce céramique afin de les rendre mates. L'étape 7 est, de manière préférée, obtenue par projection localisée de particules d'alumine sur les parties de la pièce qui sont souhaitées mates. En effet, il a été montré que le sablage par bille de verre n'était pas satisfaisant. Il est préféré selon l'invention d'utiliser des particules de corindon.

Comme visible à la figure 2, dans le premier mode de réalisation, l'état de surface de la pièce est modifié pour former des sommets 21 très agressifs contre des objets formés de matériaux plus tendres et d'anfractuosités 23 de profondeur très inégales comprises entre 5 µm et 8 µm.

Enfin, avantageusement selon l'invention, le procédé 1 de fabrication selon l'invention comporte une étape 9 finale destinée à roder les parties mates afin d'écrêter l'état de surface des parties mates et ainsi éviter que les matériaux des objets griffés remplissent les creux de l'état de surface de la céramique mate. Préférentiellement selon l'invention, l'étape 9 est obtenue par tonnelage pour obtenir un rodage compris entre 3 µm et 7 µm.

Comme visible à la figure 3, dans le premier mode de réalisation, l'état de surface de la pièce est modifié pour raboter les sommets 21 et former des zones sensiblement planes 21' entre les anfractuosités 23' de profondeurs diminuées ou annulées.

On comprend donc, avantageusement selon le premier mode de réalisation de l'invention, que les objets qui rencontreront la pièce en céramique mate, ne seront plus griffés mais glisseront sur les zones sensiblement planes 21' et la céramique conservera tout de même son aspect mat.

Comme illustré à la figure 6, dans un deuxième mode de réalisation, le procédé 1 comporte une première étape 2 destinée à fabriquer une pièce céramique comme pour le premier mode de réalisation.

Dans le deuxième mode de réalisation, le procédé 1 se poursuit avec une deuxième étape 5 destinée à polir la pièce céramique afin de mieux maîtriser la rugosité des parties mates obtenues lors de l'étape 7. L'étape 5 est réalisée, de manière préférée selon l'invention, par trovalisation afin d'obtenir une rugosité Rₐ inférieure à 20 nm.

Le procédé 1 se poursuit avec une troisième étape 7 sensiblement identique à celle du premier mode de réalisation. Ainsi, comme visible à la figure 4, dans le deuxième mode de réalisation, l'état de surface lisse de la pièce est modifié pour former des sommets 25 agressifs contre des objets formés de matériaux plus tendres et d'anfractuosités 27 de profondeurs très homogènes comprises entre 1,5 µm et 3 µm.

Enfin, avantageusement selon l'invention, le procédé 1 de fabrication selon l'invention comporte une étape 9 finale sensiblement identique à celle du premier mode de réalisation. Préférentiellement selon le deuxième mode de réalisation de l'invention, l'étape 9 permet d'obtenir un rodage compris entre 0,8 µm et 2 µm.

Comme visible à la figure 5, dans le deuxième mode de réalisation, l'état de surface de la pièce est modifié pour raboter les sommets 25 et former des zones sensiblement planes 25' entre les anfractuosités 27' plus homogènes que le premier mode de réalisation et dont les profondeurs sont diminuées ou annulées.

On comprend donc, avantageusement selon le deuxième mode de réalisation de l'invention, que les objets qui rencontreront la pièce en céramique mate, ne seront plus griffés mais glisseront sur les zones sensiblement planes 25' et la céramique conservera tout de même son aspect mat avec une plus grande homogénéité de rendu que le premier mode de réalisation.

Bien entendu, la présente invention ne se limite pas à l'exemple illustré mais est susceptible de diverses variantes et modifications qui apparaîtront à l'homme de l'art. En particulier, les applications de l'invention ne sauraient se limiter au domaine des pièces d'horlogerie. Ainsi, à titre d'exemple, la bijouterie ou la joaillerie peuvent être envisagées.

De même, les exemples de réalisation des étapes 2 à 9 du procédé 1 ne sauraient se limiter aux techniques utilisées. Il peut notamment être envisagé d'autres techniques de rodage et de polissage.

## Revendications

1. Procédé (1) de fabrication d'une pièce céramique mate (13, 14, 15, 17, 19) d'une pièce d'horlogerie, de bijouterie ou de joaillerie, le procédé comportant les étapes suivantes :
a) fabriquer (2) une pièce céramique ;
b) sabler (7) des parties de la pièce céramique afin de les rendre mates ;
**caractérisé en ce que** le procédé se poursuit avec l'étape finale suivante :
c) roder (9) les parties mates afin d'écrêter l'état de surface des parties mates.

2. Procédé (1) selon la revendication précédente, **caractérisé en ce qu'**il comprend, entre l'étape a) et l'étape b), l'étape suivante :
d) polir (5) la pièce céramique afin de mieux maîtriser la rugosité des parties mates obtenues lors de l'étape b).

3. Procédé (1) selon la revendication 1, **caractérisé en ce que** l'étape c) est obtenue par tonnelage pour obtenir un rodage compris entre 3 µm et 7 µm.

4. Procédé (1) selon la revendication 2, **caractérisé en ce que** l'étape c) est obtenue par tonnelage et le rodage obtenu par l'étape c) est compris entre 0,8 µm et 2 µm.

5. Procédé (1) selon l'une des revendications 2 ou 4, **caractérisé en ce que** l'étape d) est obtenue par trovalisation.

6. Procédé (1) selon la revendication précédente, **caractérisé en ce que**, lors de l'étape d), la rugosité Rₐ obtenue est inférieure à 20 nm.

7. Procédé (1) selon l'une des revendications précédentes, **caractérisé en ce que** l'étape a) est obtenue par frittage.

8. Procédé (1) selon l'une des revendications précédentes, **caractérisé en ce que** l'étape b) est obtenue par projection de particules de corindon.

9. Pièce d'horlogerie (11) **caractérisée en ce qu'**elle comporte au moins une pièce (13, 14, 15, 17, 19) céramique mate obtenue selon l'une des revendications précédentes.

## Patentansprüche

1. Verfahren (1) zur Herstellung eines matten Keramikteils (13, 14, 15, 17, 19) eines Zeitmessers, eines Schmuckstücks oder eines Juwels, wobei das Verfahren die folgenden Schritte aufweist:
a) Herstellen (2) eines Keramikteils;
b) Sandstrahlen (7) der Teile des Keramikteils, um sie zu mattieren;
**dadurch gekennzeichnet, dass** das Verfahren mit dem folgenden abschließenden Schritt fortgesetzt wird:
c) Abschleifen (9) der matten Teile, um den Oberflächenzustand der matten Teile zu glätten.

2. Verfahren (1) nach vorangehendem Anspruch, **dadurch gekennzeichnet, dass** es zwischen dem Schritt a) und dem Schritt b) den folgenden Schritt umfasst:
d) Polieren (5) des Keramikteils, um die Rauigkeit der bei Schritt b) erhaltenen matten Teile besser zu beherrschen.

3. Verfahren (1) nach Anspruch 1, **dadurch gekennzeichnet, dass** der Schritt c) durch Trommelbehandlung erhalten wird, um ein Abschleifen zwischen 3 µm und 7 µm zu erhalten.

4. Verfahren (1) nach Anspruch 2, **dadurch gekennzeichnet, dass** der Schritt c) durch Trommelbehandlung erhalten wird und das durch den Schritt c) erhaltene Abschleifen zwischen 0,8 µm und 2 µm liegt.

5. Verfahren (1) nach einem der Ansprüche 2 oder 4, **dadurch gekennzeichnet, dass** der Schritt d) durch Gleitschleifen erhalten wird.

6. Verfahren (1) nach vorangehendem Anspruch, **dadurch gekennzeichnet, dass** bei dem Schritt d) die erhaltene Rauigkeit Rₐ unter 20 nm beträgt.

7. Verfahren (1) nach einem der vorangehenden Ansprüche, **dadurch gekennzeichnet, dass** der Schritt a) durch Sintern erhalten wird.

8. Verfahren (1) nach einem der vorangehenden Ansprüche, **dadurch gekennzeichnet, dass** der Schritt b) durch Projektion von Korundpartikeln erhalten wird.

9. Zeitmesser (11), **dadurch gekennzeichnet, dass** er mindestens ein mattes Keramikteil (13, 14, 15, 17, 19) aufweist, das nach einem der vorangehenden Ansprüche erhalten wird.

## Claims

1. Process (1) for manufacturing a dull ceramic part (13, 14, 15, 17, 19) of a timepiece or piece of jewellery, the process including the following steps:
a) manufacturing (2) a ceramic part;
b) sanding (7) parts of the ceramic part in order to render them dull; **characterised in that** the process is continued with the following final step:
c) lapping (9) the dull parts in order to level the surface texture of the dull parts.

2. Process (1) according to the preceding claim, **characterised in that** it comprises, between step a) and step b), the following step:
d) polishing (5) the ceramic part in order to better control the roughness of the dull parts obtained during step b).

3. Process (1) according to claim 1, **characterised in that** step c) is obtained by tumbling to obtain a lapping between 3 µm and 7 µm.

4. Process (1) according to claim 2, **characterised in that** step c) is obtained by tumbling and the lapping obtained by step c) is between 0.8 µm and 2 µm.

5. Process (1) according to one of claims 2 or 4, **characterised in that** step d) is obtained by tribofinishing.

6. Process (1) according to the preceding claim, **characterised in that**, during step d), the roughness Rₐ obtained is less than 20 nm.

7. Process (1) according to one of the preceding claims, **characterised in that** step a) is obtained by sintering.

8. Process (1) according to one of the preceding claims, **characterised in that** step b) is obtained by projecting corundum particles.

9. Timepiece (11) **characterised in that** it includes at least one dull ceramic part (13, 14, 15, 17, 19) obtained according to one of the preceding claims.
